# EUROPEAN PATENT SPECIFICATION

(11) **EP 0 810 319 B1**
(45) Date of publication and mention of the grant of the patent: **09.05.2001**
(21) Application number: 97303715.3
(22) Date of filing: 30.05.1997
(51) Int. Cl.: D06F 37/22

(54) **Washing machine**
Waschmaschine
Machine à laver

(30) Priority: 30.05.1996 KR 9613850
(43) Date of publication of application: 03.12.1997
(73) Proprietor: SAMSUNG ELECTRONICS CO., LTD., Suwon-City, Kyungki-do (KR)
(72) Inventor: Kim, Jin-Soo, Suwon City, Kyungki-Do (KR)
(74) Representative: Read, Matthew Charles

(56) References cited:
- DE-U- 1 912 481
- FR-A- 1 213 067
- FR-A- 2 393 097

## Description

The present invention generally relates to a drum washing machine comprising a rotatably mounted drum for receiving a load of laundry having a pair of end panels separated by a tubular side panel, lifters projecting radially in from said side panel, annular races coaxial with the drum and located at either end of the drum and a plurality of balls in the races.

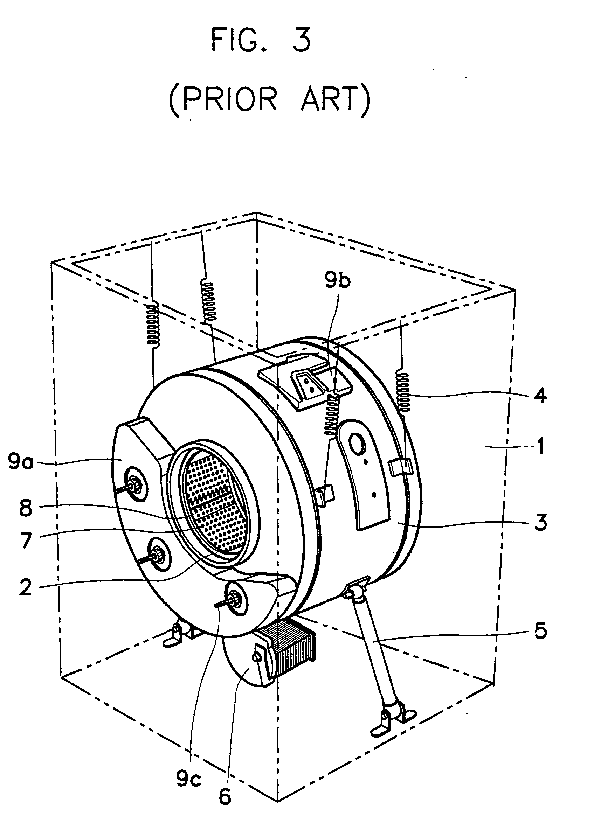

A conventional drum washing machine is illustrated in Figure 3 and is an appliance in which clothes are washed using suds generated as a result of rotation of its drum-type spin basket. Washing, rinsing and spin drying tasks are carried out automatically in response to a predetermined program. After the clothes have been washed and rinsed, centrifugal force is used to remove excess water by rotating the spin basket at high speeds in a spin drying cycle. Uneven distribution of clothes in the spin basket during this spin cycle can cause abnormal vibrations and noise and so a balancing device is required for sufficient operation of the washing machine.

Referring to Figure 3, the conventional drum washing machine includes a housing 1 containing a tub 3 suspended by suspension springs 4 and shock-absorbing members 5. A spin basket 2 is mounted for rotation within the tub 3 by an electric motor 6 mounted on the bottom of the housing 1, by means of a belt (not illustrated). The spin basket 2 includes a plurality of small holes 7 uniformly formed in its surface, and a plurality of lifters 8 spaced a predetermined distance away from each other and extending radially inwardly towards the axis of rotation of the spin basket.

Water drains from the spin basket 2 into the tub 3 through the small holes 7, and the lifters 8 agitate the laundry and water created during the rotation of the spin basket 2, to thereby create suds which clean the clothes.

To prevent vibration during the operation cycle, cast iron counterweights 9a, 9b each of predetermined weight, are attached to the front and upper cylindrical surface of the tub 3 by bolts 9c. The front counterweight 9a is generally in the region of 11.4kg and the upper counterweight 9b is generally in the region of 12.2kg.

A particular disadvantage with the conventional balancing device described above is that it does not fundamentally prevent vibration created by unevenly distributed laundry in the washing machine, but instead, the counterweights only dampen the vibration and therefore have inferior balancing characteristics. Moreover, the conventional balancing device dampens the vibration transmitted to the tub 3 rather than the vibration of the spin basket itself and so is incapable of controlling the imbalance as soon as it occurs.

It is known from FR-A-1213067 and FR-A-2393097 to mount ball races at the front and end panels of the drum to provide balancing.

A washing machine according to the present invention is characterised in that the annular races are formed by channelled plate members attached to flat, outside regions of respective end panels and the lifters comprise radially inwardly bent portions of said side panel and extend fully between the end panels.

A further race may be provided on each end panel, radially inwardly disposed relative to the lifters.

In the following description, the element referred to as the "spin basket" is an example of a "drum" as mentioned in the claims.

The meaning of the expression "washing machine" should be taken to include spin dryers, tumble dryers and the like.

Embodiments of the present invention will now be described, by way of example only, with reference to the accompanying drawings, in which:
Figure 1 is a sectional view of a drum washing machine with a balancing device in accordance with a preferred embodiment of the present invention;
Figure 2 is an enlarged view of a part of the balancing device of Figure 1; and
Figure 3 is a perspective view of the overall construction of a conventional drum washing machine.

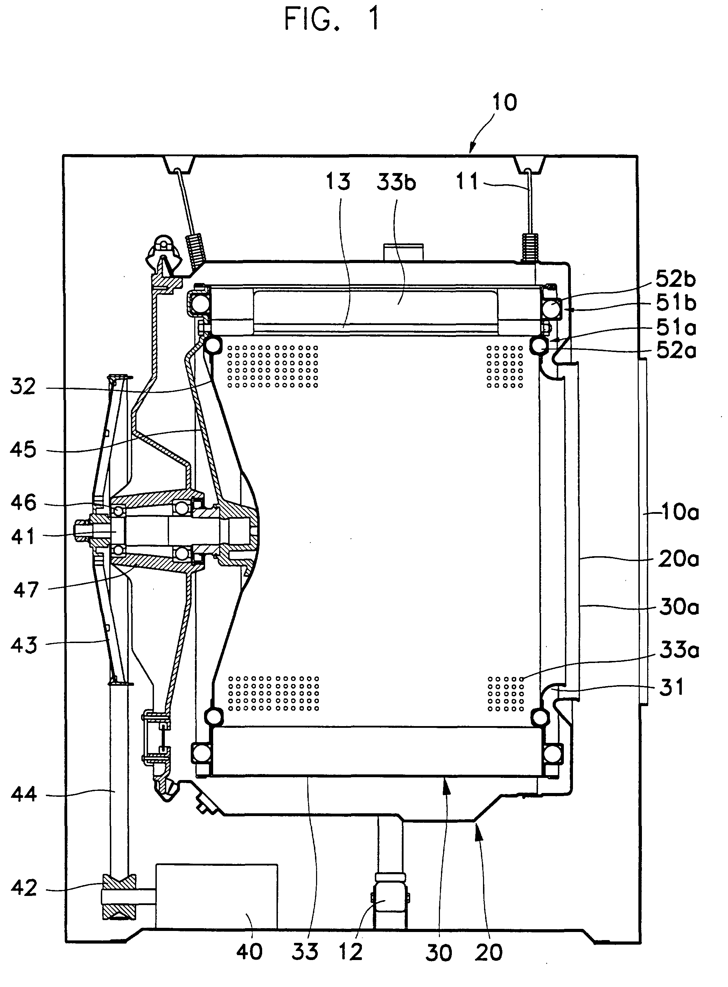

As shown in Figure 1, the drum washing machine of the preferred embodiment includes a housing 10 having a tub 20 suspended therein, a spin basket 30 mounted for rotation within the tub 20 by an electric motor 40 installed in the housing beneath the tub 20. The tub 20 is suspended by four springs 11 arranged on four sides of the housing 10, and a pair of shock absorbing arms 12 are provided under the tub 20.

The tub 20 and spin basket 30 are mounted so that the axis of rotation of the spin basket is parallel to the ground and corresponding openings 10a, 20a and 30a are formed on the front of the housing 10, the front of the tub 20 and the front of the spin basket 30 respectively so that laundry can be put into or taken out of the spin basket 30 through the tub 20 and housing 10.

The spin basket 30 has front and rear panels 31 and 32 separated by a cylindrically-shaped side panel 33. A plurality of holes 33a are uniformly distributed in the side panel 33, and three lifters 33b spaced 120° from each other which raise and drop laundry during washing are formed on the side panel 33 and extend radially inwardly in the form of a "V". The small holes 33a allow water to flow freely between the tub 20 and the spin basket 30.

The spin basket 30 is driven by the motor through a horizontally supported shaft 41 which extends from the spin basket through tub 20. A first pulley 42 is connected to the electric motor 40, and a second pulley 43 is connected to the shaft 41. A belt 44 is placed between the first and second pulleys 42 and 43, and a flange 45 is provided in the rear panel 32 connected with the shaft 41 to provide room for a pair of bearings 46 installed in a bearing housing between the shaft 41 and the tub 20 so as to support the shaft 41.

The spin basket 30 has a pair of balancing devices provided on both the front and rear panels 31 and 32 to counteract the vibration and imbalance created during rotation due to uneven distribution of laundry in the spin basket. The balancing devices comprise annular races 51a and 51b concentrically formed on inner and outer sides of the front and rear panels 31 and 32, and a plurality of balls 52a and 52b (which serve as counterweights) are seated in the races 51a and 51b. The inner race 51a and the outer race 51b protrude inwardly and outwardly respectively. The inner race 51a and the outer race 51b are welded to each other to form a seal. The races 51a and 51b contain a predetermined amount of oil to allow the balls 51a and 51b to move freely.

Because the races 51a and 51b provided on the front panel 31 and rear panel 32 have essentially the same structure only the structure of the races 51a and 51b on the front panel 31 will be described in detail.

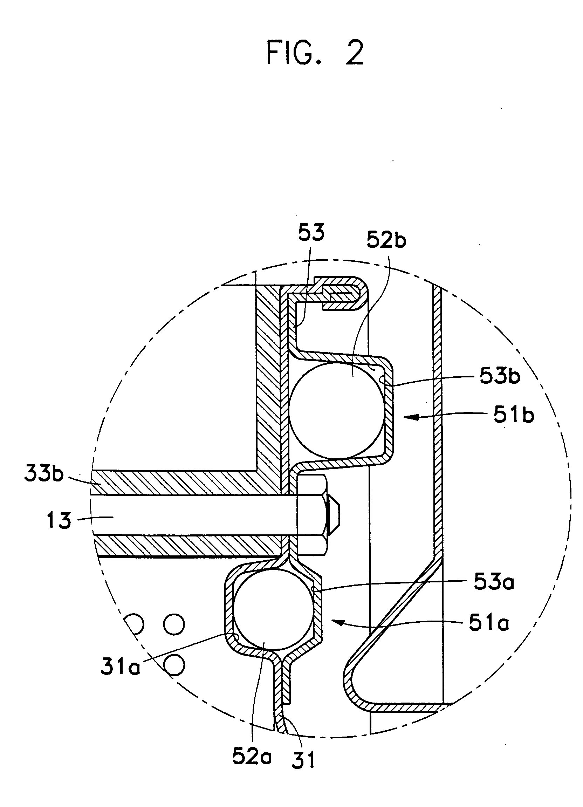

As shown in Figure 2, the races 51a and 51b each comprise a combination of the front panel 31 and a plate member 53 coupled thereto. The outer race 51b protrudes outwardly to facilitate the provision of the lifter 33b. That is, the outer race 51b is formed from the combination of the outwardly protruding groove 53b, provided in the plate member 53, and the planar front panel 31. The area of the front panel 31 in contact with the end portion of the lifter 33b is planar to enable the lifter 33b to be manufactured easily by bending the side panel 33 radially inwardly.

The inner race 51a, which does not interfere with the lifter 33b is formed from a combination of the outwardly protruding groove 53a in the plate member 53 and an inwardly extending groove 31a in the front panel 31.

Deformation of the spin basket 30 that may occur during manufacturing is prevented by minimising the depth of the inward groove 31a and the outward groove 53a.

The plate member 53, the front panel 31 and the rear panel 32 constituting the races 51a and 51b are additionally joined to each other by a bolt 13 (refer to Figure 1).

The following description relates to the operation of the drum washing machine with the balancing device.

The electric motor 40 rotates the spin basket 30 in either a forward and reverse direction to generate suds and carry out the washing process aided by the action of the lifters 33b formed on the side panel 33 of the spin basket 30 which agitates the laundry.

Water is removed from the laundry during the spin cycle using centrifugal force generated when the spin basket 30 rotates at high speeds, and drains into the tub 20 through the holes 33a formed on the side panel 33.

The vibration created by the uneven distribution of laundry can be reduced by the following procedure.

The laundry is located on the bottom of the spin basket 30 in the initial stage of the spin drying process. As centrifugal force is created as a result of rotating the spin basket at high speed, the balls 52a and 52b move to the opposite side of the imbalance along the corresponding races 51a and 51b thus compensating for the out of balance condition of the spin basket 30 and preventing the vibration and eccentric rotation thereof.

More specifically, the spin basket 30 rotates essentially from its geometric centre due to the laundry being unevenly distributed in the spin basket 30. The centrifugal force from the geometric centre and that of the spin basket's actual centre of rotation simultaneously act on the balls 52a and 52b in the races 51a and 51b, so that they relocate to a predetermined position to oppose the imbalance. The balls 52a and 52b turn about the geometric centre of the spin basket 30, thus making the spin basket 30's centre of rotation correspond to the geometric centre. The unbalanced state of the spin basket 30 is thereby countered to eliminate the vibration and noise.

As fully described above, the drum washing machine, equipped with the balancing device of the present invention, prevents the spin basket from imbalanced rotation by dynamically counteracting any imbalances that may occur as a result of an uneven arrangement of laundry therein, and eliminates the vibration and noise created during rotation. The balancing device may also prevent unnecessary wear of the components used to support the rotation of the spin basket and abnormal noise created by friction.

In addition, the areas of the front and rear panels that contact the lifters are planar, and, since both ends of the lifters are flat themselves, the manufacturing of the lifters is facilitated.

## Claims

1. A drum washing machine comprising: -
a rotatably mounted drum (30) for receiving a load of laundry having a pair of end panels (31,32) separated by a tubular side panel (33);
lifters (33b) projecting radially in from said side panel (33);
annular races (51b) coaxial with the drum (30) and located at either end of the drum; and
a plurality of balls (52b) in the races,
**characterised in that** the annular races (51b) are formed by channelled plate members (53) attached to flat, outside regions of respective end panels (31, 32) and the lifters (33b) comprise radially inwardly bent portions of said side panel (33) and extend fully between the end panels (31, 32).

2. A washing machine according to claim 1, including a further race (51a) on each end panel (31,32) radially inwardly disposed relative to the lifters (33b).

## Patentansprüche

1. Trommelwaschmaschine (30), die folgendes umfaßt:
eine rotierbar angebrachte Trommel (30) zum Aufnehmen einer Wäscheladung, wobei die Trommel ein Paar Endverkleidungen (31, 32) aufweist, die durch eine röhrenförmige Seitenverkleidung (33) getrennt sind;
Aufnehmer (33b), die von der Seitenverkleidung (33) aus radial nach innen vorstehen;
kreisförmige Laufringe (51b), die koaxial zur Trommel (30) angeordnet und an den beiden Enden der Trommel positioniert sind; und
eine Mehrzahl von Kugeln (52b) in den Laufringen,
dadurch gekennzeichnet, daß die kreisförmigen Laufringe (51b) durch Raupenblechglieder (53) ausgebildet sind, die an flachen Außenbereichen der entsprechenden Endverkleidungen (31, 32) angebracht sind, und daß die Aufnehmer (33b) radial einwärts gebogene Bereiche der Seitenverkleidung (33) umfassen und sich auf ganzer Länge zwischen den Endverkleidungen (31, 32) erstrecken.

2. Waschmaschine nach Anspruch 1, die auf jeder Endverkleidung (31, 32) einen weiteren, bezüglich der Aufnehmer (33b) radial einwärts angeordneten Laufring (51a) aufweist.

## Revendications

1. Lave-linge à tambour comprenant :
un tambour monté en rotation (30) pour recevoir une charge de linge, comportant une paire de panneaux d'extrémité (31, 32) séparés par un panneau latéral tubulaire (33) ;
des bossages de brassage (33b) en saillie radialement vers l'intérieur depuis ledit panneau latéral (33) ;
des cages annulaires (51b) coaxiales au tambour (30) et situées à chaque extrémité du tambour ; et
une pluralité de billes (52b) dans les cages,
caractérisé en ce que les cages annulaires (51b) sont formées par des plaques à rainures (53) fixées à des régions extérieures, plates, des panneaux d'extrémité respectifs (31, 32) et les bossages de brassage (33b) comprennent des parties incurvées radialement vers l'intérieur dudit panneau latéral (33) et s'étendent entièrement entre les panneaux d'extrémité (31, 32).

2. Lave-linge selon la revendication 1, comprenant une cage supplémentaire (51a) sur chaque panneau d'extrémité (31, 32) disposée radialement vers l'intérieur relativement aux bossages de brassage (33b).
